# EUROPÄISCHE PATENTSCHRIFT

(11) **EP 0 496 118 B1**
(45) Veröffentlichungstag und Bekanntmachung des Hinweises auf die Patenterteilung: **08.03.1995**
(21) Anmeldenummer: 91122336.0
(22) Anmeldetag: 27.12.1991
(51) Int. Cl.: A23L 1/24, A23C 9/154

(54) **Mayonnaiseartiges Produkt, Verfahren zu dessen Herstellung und dessen Verwendung**
Mayonnaise-like product, process for preparing it and its use
Produit du type mayonnaise, procédé de préparation et application

(30) Priorität: 27.12.1990 DE 9017506 U
(43) Veröffentlichungstag der Anmeldung: 29.07.1992
(73) Patentinhaber: Toseno GmbH & Co. KG, D-21079 Hamburg (DE)
(72) Erfinder: Jackeschky, Hans Joachim, W-2071 Hammoor (DE)
(74) Vertreter: UEXKÜLL & STOLBERG

(56) Entgegenhaltungen:
- EP-A- 0 049 927
- EP-A- 0 129 346
- FR-A- 2 302 051
- FR-A- 2 357 190
- FR-A- 2 390 105
- GB-A- 2 187 075
- CHEMICAL ABSTRACTS, vol. 105, no. 10, November 1986, Columbus, Ohio, US;abstract no. 170959Y, S.SZAKALY: 'Stabilizing acid post-treated dairy products'Seite 618 ;

## Beschreibung

Die Erfindung betrifft ein mayonnaiseartiges Produkt, ein Verfahren zu dessen Herstellung und dessen Verwendung zur Herstellung von kalorienreduzierten Salatsaucen, Salatcremes, Dressings, Remouladen, Salaten und dergleichen.

Echte Mayonnaise ist eine Emulsion aus Hühnereigelb, pflanzlichem Speiseöl, Zucker, Salz, Gewürzen und Essig oder Zitronensaft. Es sind auch Salatmayonnaisen und mayonnaisenartige Salatcremes bekannt, die Zusätze von Milcheiweiß, Stärke und Verdickungsmitteln enthalten und deren Fettgehalt unter 50 Gew.-% liegt. Für Feinkostanwendungen wird auch dieser Fettanteil von den Verbrauchern als zu hoch empfunden. Es ist daher schon verschiedentlich versucht worden, eine mayonnaiseartige Emulsion mit einem Fettgehalt um 10 Gew.-% herzustellen. Diese Produkte waren jedoch geschmacklich und von ihrem Mundgefühl her so eigenartig, daß sie von den Verbrauchern nicht angenommen wurden.

So wurde insbesondere versucht, eine Fettreduzierung durch den Einsatz von abgebauten Stärken zu erreichen. Dies erfolgt, indem etwa 20 gew.-%ige wäßrige Pasten mit diesen abgebauten Stärken hergestellt werden, die dann als Fettersatz dienen. Der Nachteil dieser Produkte nach deren Aufschlämmung bzw. Auskochung ist, daß sie bis zu 20 Stunden stehen müssen, um die gewünschte Endkonsistenz zu erreichen, die eine Weiterverarbeitung, z.B. zu Salaten, zuläßt. Dieser Zeitaufwand ist für eine Massenproduktion in der Feinkostindustrie zu groß. Ein weiterer und von den Verbrauchern nicht akzeptierter Nachteil dieser Produkte besteht darin, daß damit hergestellte fettarme mayonnaiseartige Produkte bei der Lagerung zum Nachgelieren neigen, also ihre mayonnaiseartige cremige Konsistenz verlieren und puddingartig werden.

Der Erfindung liegt deshalb die Aufgabe zugrunde, ein mayonnaiseartiges Produkt zu schaffen, dessen Speiseöl- bzw. Fettanteil gegenüber herkömmlicher Mayonnaise stark vermindert ist, ohne daß Beeinträchtigungen hinsichtlich Geschmack, Mundgefühl und optischem Eindruck auftreten.

Zur Lösung dieser Aufgabe wird ein mayonnaiseartiges Produkt vorgeschlagen, das erhältlich ist durch Verarbeitung von mit besonders amylopektinreicher Stärke als Dickungsmittel pastenförmig angedickter Frischmilch, eßbarer Säure, üblichen Zusatzstoffen und gegebenenfalls Speiseöl zu einer Emulsion.

Gegenstand der Erfindung ist ferner ein Verfahren zur Herstellung des erfindungsgemäßen mayonnaiseartigen Produkts, bei dem man Frischmilch mit Amylopektinstärke mischt, die Mischung kurzzeitig auf 75°C bis 95°C, vorzugsweise 85°C bis 92°C erwärmt und die erhaltene pastenförmige Mischung unter Zusatz von eßbarer Säure, üblichen Zusatzstoffen und gegebenenfalls Speiseöl zu einer Emulsion verarbeitet, wobei man das Speiseöl erst nach Abkühlung auf eine Temperatur von 30°C oder weniger zusetzt.

Gegenstand der Erfindung ist ferner die Verwendung des erfindungsgemäßen mayonnaiseartigen Produkts für die Herstellung von kalorienreduzierten Salatsaucen, Salatcremes, Dressings, Remouladen, Salaten und dergleichen.

Der Erfindung liegt die Erkenntnis zugrunde, daß das Milcheiweiß in frisch gemolkener Milch in einer Weise vorliegt, die am ehesten vergleichbar ist mit einer wäßrigen, echten Lösung eines Elektrolyten. Diese absolute Löslichkeit der Milchproteine liegt nur in der Milch kurz nach dem Melken vor, da die Proteinmoleküle (Globulin, Kasein) einem rasanten, irreversiblen, durch eine Proteinaggregation gekennzeichneten Alterungsprozeß unterliegen, der bis zur völligen Denaturierung, d.h. zur absoluten Unlöslichkeit, führen kann. Dementsprechend ist es erfindungsgemäß wesentlich, daß es sich bei der verwendeten Milch um frische Milch handelt, bei der der irreversible Alterungsprozeß der Proteinmoleküle noch nicht zu weit fortgeschritten bzw. rechtzeitig unterbrochen worden ist, da sonst bei der durch die Säure- und Zusatzstoffzugabe eintretenden Koagulation zu große Teilchen entstehen, die die Herstellung eines mayonnaiseartigen Produktes mit einem akzeptablen Mundgefühl und einer ausreichenden Geschmacksstabilität nicht zulassen. Unter "Frischmilch" wird deshalb erfindungsgemäß eine Milch (Rohmilch) verstanden, die den Qualitätsanforderungen von Vorzugsmilch genügt. Vorzugsmilch muß von garantiert gesunden Tierbeständen (ständige tierärztliche Kontrolle) durch gesundes Melkpersonal unter strengsten hygienischen Bedingungen ermolken sowie zwischengelagert werden und darf nicht älter als 24 Stunden sein, wobei die bakteriologischen Höchstwerte zum Zeitpunkt der Verarbeitung folgende Werte nicht erreichen dürfen: Aerobe, mesophile Keime 20 000/ml; Enterobacteriaceen 100/ml; Staphylococcus aureus 100/ml.

Die erfindungsgemäß als "Frischmilch" verwendbare Milch kann allerdings durch geeignete Behandlung stabilisiert sein. So kann der Alterungsprozeß der Proteinmoleküle durch Kühlung oder Pasteurisierung erheblich verzögert werden. Dadurch verlängert sich der Verarbeitungszeitraum der Frischmilch. Sobald jedoch die physikalische, chemische als auch bakteriologische Beschaffenheit der Milch nicht mehr den Qualitätsmerkmalen einer Vorzugsmilch entspricht, werden keine befriedigenden mayonnaiseartigen Produkte erhalten.

Weiterhin ist es möglich, die erfindungsgemäß verwendbare Frischmilch in üblicher Weise zu homogenisieren, zu entfetten bzw. zu entrahmen (Magermilch) oder geringfügig zu entwässern und dadurch einzudicken (nicht mehr als 10 bis 15 % Wasserentzug). Auch hierbei muß allerdings gewährleistet sein, daß die physikalischen, chemischen und bakteriologischen Qualitätsanforderungen an eine Vorzugsmilch erhalten bleiben.

Entscheidend ist also, daß die Frischmilch bis zu der erfindungsgemäßen Verarbeitung stets in der flüssigen Ursprungsform gehalten wird und die oben genannten Behandlungen so gestaltet sind, daß sich durch sie bzw. im Anschluß an sie die Verteilung und Löslichkeit der Milchproteine bis zur Fertigstellung des erfindungsgemäßen Produkts durch die Säure- bzw. Gewürzzugabe im wesentlichen nicht mehr verändern. Mit anderen Worten bedeutet dies, daß die Milchproteine bis zur Fertigstellung des erfindungsgemäßen Produkts durch Säure- bzw. Gewürzzugabe in einem Zustand vorliegen müssen, wie er in einer Vorzugsmilch vorzufinden ist.

Als Dickungsmittel für die Frischmilch dient besonders amylopektinreiche Stärke, d.h. Stärke mit einem Amylopektingehalt von mehr als 75 %, vorzugsweise mehr als 80 % und insbesondere mehr als 90 %. Eingesetzt werden können native oder modifizierte Stärken wie Weizenstärke und insbesondere Waxymaisstärke. Es können auch Mischungen von Stärken verwendet werden, wobei darauf zu achten ist, daß bei Einsatz von Stärken mit einem Amylopektingehalt von weniger als 75 % der durchschnittliche Amylopektingehalt der Mischung über 75 % liegt. Stärken oder Stärkegemische mit einem derartig hohen Amylopektingehalt zeichnen sich im allgemeinen dadurch aus, daß sie nicht zur Gelbildung neigen, so daß sie für die erfindungsgemäßen Zwecke geeignet sind. In Ausnahmefällen kann es aber sein, daß eine Stärke einen ausreichend hohen Amylopektingehalt besitzt, aufgrund ihrer Neigung zum Gelieren jedoch im Rahmen der Erfindung nicht einsetzbar ist. Dies ergab sich beispielsweise bei handelsüblicher Kartoffelstärke mit hohem Amylopektingehalt, die keine ausreichende Scherstabilität und Beständigkeit gegenüber Säure aufweist und dadurch zur Gelbildung führt. Bezogen auf die Frischmilch soll der Stärkeanteil nicht mehr als 15 Gew.-% und vorzugsweise 5 bis 10 Gew.% betragen.

Als zusätzliches Dickungsmittel können durch Hitzeeinwirkung koagulierende Proteine eingesetzt werden. Beispiele hierfür sind Hühnereiweiß und Molkenprotein. Bei Verwendung dieser zusätzlichen Dickungsmittel muß selbstverständlich die Stärkemenge reduziert werden, damit das Produkt eine geeignete Konsistenz besitzt.

Ferner ist es bevorzugt, daß das erfindungsgemäße mayonnaiseartige Produkt Stabilisatoren enthält. Diese sind dem Fachmann bekannt und werden der Mischung aus Frischmilch und Dickungsmittel zugesetzt. Erfindungsgemäß werden ausschließlich natürliche Stabilisatoren verwendet. Als besonders geeignet haben sich Hydrokolloide wie Guar, Pektin und Mischungen derselben erwiesen.

Zur funktionellen Proteinanreicherung können der Frischmilch außerdem Milchproteine wie Milchpulver und Kaseinate zugesetzt werden.

Bezüglich der erfindungsgemäß verwendbaren Dickungsmittel, Stabilisatoren und der Proteinanreicherung dienenden Zusatzstoffe ist darauf hinzuweisen, daß eine eindeutige Abgrenzung dieser Substanzen voneinander nicht möglich ist. So wirkt die Stärke nicht nur als Dickungsmittel sondern auch als Stabilisator. Andererseits haben die Stabilisatoren ebenfalls eine ausgeprägte Wirkung auf die Konsistenz des mayonnaiseartigen Produkts. Schließlich wirkt Kaseinat auch als Stabilisator. Dementsprechend sind die jeweiligen Mengen dieser Bestandteile sorgfältig aufeinander abzustimmen, damit das erfindungsgemäße mayonnaiseartige Produkt die gewünschte Beschaffenheit aufweist. Besonders gute Produkte werden in der Tat erzielt, wenn sorgfältig aufeinander abgestimmte Mischungen dieser Bestandteile vorhanden sind.

Vorzugsweise besteht die pastenförmig angedickte Frischmilch aus mehr als 80 Gew.-% und vorzugsweise mehr als 85 Gew.-% Frischmilch.

Die übrigen Bestandteile des erfindungsgemäßen mayonnaiseartigen Produkts entsprechen dem Stand der Technik. So können als übliche Zusatzstoffe beispielsweise Salz, Zucker, Senf, Aromen, Farbstoffe und Vitamine verarbeitet werdend. Zu den geeigneten eßbaren Säuren gehören insbesondere Essigsäure, Zitronensäure und Apfelsäure. Häufig werden diese Bestandteile in ihrer Gesamtheit als Gewürze bzw. Gewürzmischung bezeichnet.

Ferner kann dem Dickungsmittel ein geeignetes Konservierungsmittel zur Erhöhung der bakteriologischen Haltbarkeit der mayonnaiseartigen Emulsion zugesetzt werden. Dieser Zusatz ist zwar nicht unbedingt erforderlich, empfiehlt sich aber beispielsweise beim Chargenbetrieb, da hier durch Unterbrechungen der Verarbeitung eine erhöhte Kontaminierungsgefahr besteht.

Auch die verwendbaren Speiseöle bieten keine Besonderheit, d.h. es werden die aus dem Stand der Technik bekannten Speiseöle verwendet. Allerdings ist es im Hinblick auf die Herstellung von kalorienreduzierten Produkten bevorzugt, daß möglichst wenig Speiseöl eingesetzt wird. Wenngleich größere Speiseölanteile verarbeitet werden können, soll der Speiseölanteil im fertigen mayonnaiseartigen Produkt nicht mehr als 30 Gew.-%, insbesondere nicht mehr als 15 Gew.% und vorzugsweise 4 bis 8 Gew.-% betragen. Dabei ist es erfindungsgemäß möglich, sogar ganz auf Speiseöl zu verzichten und dennoch ein einwandfreies mayonnaiseartiges Produkt zu erhalten.

Zur Herstellung des erfindungsgemäßen mayonnaiseartigen Produkts wird zunächst eine Mischung aus Frischmilch und Dickungsmittel hergestellt. Dies erfolgt aus Haltbarkeitsgründen bevorzugt im Heißverfahren. Dabei wird die Mischung aus Frischmilch und Dickungsmittel sowie gegebenenfalls Stabilisatoren und Zusatzstoffen für die Proteinanreicherung kurzzeitig (1 bis 2 Minuten) auf 75°C bis 95°C und vorzugsweise 85°C bis 92°C erwärmt. Die Weiterverarbeitung zur Emulsion kann dann in herkömmlicher Weise heiß oder kalt erfolgen, sofern die Regeln der GMP beachtet werden. Wenn dabei auch Speiseöl eingesetzt wird, sollte dieses jedoch erst dann zugesetzt werden, wenn eine Abkühlung auf eine Temperatur von 30°C oder weniger erfolgt ist. Im übrigen ist es bevorzugt, daß die Scherkräfte bei der Emulsionsbildung möglichst gering gehalten werden, um die Struktur der relativ scherempfindlichen besonders amylopektinreichen Stärken nicht unnötig zu belasten und eine Verkleinerung der zu emulgierenden bzw. emulgierten Teilchen zu vermeiden. Eine derartig geringe mechanische Belastung ist auch ohne weiteres möglich, da der zunächst hergestellte Proteinkulli (siehe Beispiele) einen solchen Emulgatorüberschuß aufweist, daß zur Ölemulgierung keine hohen Scherkräfte erforderlich sind. Die so hergestellten Emulsionen schmecken wie Mayonnaise und weisen das einer Mayonnaise entsprechende Mundgefühl (Glätte) und Aussehen auf. Ihr pH-Wert liegt im allgemeinen zwischen 5 und 3, bevorzugt um 4,5.

Das erfindungsgemäße mayonnaiseartige Produkt zeichnet sich insbesondere dadurch aus, daß es sofort nach der Herstellung die gewünschte mayonnaiseartige Endkonsistenz aufweist, so daß eine Abfüllung in Verkaufsverpackung, z.B. in Gläsern, oder eine Weiterverarbeitung, z.B. zu Salaten, unmittelbar erfolgen kann. Ein weiterer Vorteil besteht darin, daß bei der üblichen nachfolgenden Lagerung des verkaufsfertigen Produkts bis zum Verzehr, die sich auf 4 bis 24 Wochen erstrecken kann und im Kühlregal erfolgt, die mayonnaiseartige cremige Konsistenz der Produkte unverändert erhalten bleibt.

Das erfindungsgemäße mayonnaiseartige Produkt eignet sich für die Herstellung von kalorienreduzierten Salatsaucen, Salatcremes, Dressings, Remouladen, Salaten und dergleichen. Beispiele hierfür sind Gemüsesalate, Fleischsalate und Fischsalate.

Die Erfindung wird anhand der folgenden Beispiele näher erläutert. Wenn nicht anders angegeben, handelt es sich bei allen Prozentangaben um Gewichtsprozent.

### Beispiel 1

### Herstellung einer fettfreien oder fettarmen (4 Gew.% Fett) "Frittensauce" im Chargenbetrieb

1. Herstellung der Basispaste (Proteinkulli)
Der Proteinkulli wurde aus einer Mischung von 88,8 Gew.% entfetteter Vorzugsmilch (Magermilch), 9,75 Gew.-% Dickungsmittel (Weizenstärke, Guar, Kaseinat), 1,25 Gew.-% Salz und 0,2 Gew.-% Konservierungsmittel hergestellt. Diese Mischung wurde in einer Art Puddingkocher auf mindestens 85°C erwärmt und anschließend auf Raumtemperatur abgekühlt. Alternativ konnte auch ein kontinuierlicher Wärmeaustauscher benutzt werden, in dem ebenfalls eine Erwärmung auf 85°C bei einer Verweilzeit von 2 Minuten erfolgte. Anschließend wurde ebenfalls auf Raumtemperatur abgekühlt.
2. Weiterverarbeitung zum Dressing
Die Weiterverarbeitung des Proteinkullis zum Dressing erfolgte dann wie üblich in einem Mischhomogenisator entsprechend folgenden Rezepturen:

| | fettfrei | mit 4 % Öl |
|---|---|---|
| Proteinhaltiger Spezialkulli | 50,00 % | 50,00 % |
| Salz | 1,20 % | 1,20 % |
| Zucker | 4,20 % | 4,20 % |
| Riboflavin 1 %-ig | 0,20 % | 0,20 % |
| Konservierung | 0,20 % | 0,20 % |
| Senf | 6,90 % | 6,90 % |
| Essig 10 %-ig | 6,20 % | 6,20 % |
| Zitronensäure | 0,14 % | 0,14 % |
| Gewürze und Aromen | 0,07 % | 0,07 % |
| Öl | 0,00 % | 4,00 % |
| Wasser | 30,89 % | 26,89 % |
| | 1̅0̅0̅,̅0̅0̅ %̅ | 1̅0̅0̅,̅0̅0̅ %̅ |

### Beispiel 2

### Herstellung einer fettarmen (8 Gew.-% Öl) "Mayonnaise"

1. Ansatz für Proteinkulli
   86,0 % Frischmilch
   12,5 % Dickungsmittel (Weizenstärke, Waxymaisstärke, Guar, Kaseinat)
   1,3 % Salz
   0,2 % Konservierungsmittel
2. Ansatz Ölphase
   94,00 % Sojaöl
   6,00 % rotes Palmöl (als Antioxydans und Farbgeber)
3. Ansatz Gewürzmischung
   53,50 % Essig, 10 %-ig
   19,00 % Zucker
   20,00 % Senf
   5,00 % Salz
   1,50 % Zitronensäure
   1,00 % Apfelsäure

Die Herstellung der Mayonnaise erfolgte kontinuierlich mittels eines Schröder-Kombinators. Die Maschineneinstellung erfolgte für eine Stundenleistung von 1000 kg.
- Dosierpumpen:: Pumpe 1 für Frischmilch/Dickungsmittel-Aufschlämmung 820 l/h
Pumpe 2 für Ölphase 80 l/h
Pumpe 3 für Essig-Gewürzmischung 100 l/h
- Erhitzungszylinder:: mindestens 85°C, maximal 92°C
- Haltezylinder:: 1 Minute
- Kühlzylinder:: 20°C, maximal 25°C.

Die Drehzahl der Rotoren (Schaber) wurde so gering wie möglich eingestellt (maximal 400 bis 600 U/min).

Die Drehzahlen des Homogenisatorzylinders bzw. des Viskorotors in denen die Ölphase und danach die Gewürzmischung eingearbeitet wurden, wurden ebenfalls so gering wie möglich eingestellt, um zu vermeiden, daß die Struktur der relativ empfindlichen amylopektinreichen Stärke nicht unnötig belastet wird. Dies war möglich, da im Proteinkulli ein derartig hoher Emulgatorüberschuß vorlag, daß zur Ölemulgierung keine hohen Scherkräfte erforderlich waren.

Die so hergestellte fettarme Mayonnaise besaß eine feste Konsistenz wie zur Salatherstellung gebräuchlich und konnte sofort mit Festbestandteilen zu Salaten weiterverarbeitet werden.

### Beispiel 3

### Herstellung einer fettfreien "Mayonnaise" mittlerer Konsistenz als Glasware (Konsumware)

Die Herstellung erfolgte kontinuierlich ohne Zwischenabkühlung, d.h., die fertige Mayonnaise wurde sofort, um eine Rekontamination zu vermeiden, heiß in die Gläser abgefüllt, so daß auf Konservierungsstoffe verzichtet werden konnte.

Die Herstellung erfolgte ähnlich wie in Beispiel 2 mit einem Schröder-Kombinator, wobei allerdings der Kühlzylinder entfiel.
1. Ansatz für Proteinkulli
   88,75 % Frischmilch
   11,00 % Dickungsmittel (Weizenstärke, Waxymaisstärke, Natriumkaseinat, Hühnereiweiß und Guar)
   1,25 % Salz
2. Ansatz für Gewürzmischung
   45,00 % Essig, 10 %-ig
   45,00 % Zucker
   5,50 % Salz
   2,00 % Senf
   1,50 % Zitronensäure
   1,00 % Apfelsäure
Die Dosierpumpen wurden für eine Stundenleistung von 1000 kg eingestellt.
- Pumpe 1: für Frischmilch/Dickungsmittelmischung 890 l/h
- Pumpe 2: für Essig/Gewürzmischung 110 l/h
- Kochzylinder:: mindestens 85°C, maximal 92°C
- Haltezylinder:: mindestens 1 Minute, maximal 1,5 Minuten
Die Zylinderumdrehung im Koch- und Haltezylinder wurde so gering wie möglich eingestellt und betrug maximal 400 U/min.

Die aus der Anlage kommende Ware wurde sofort heiß in die Endverpackung abgefüllt. Nach dem Abkühlen in den Gläsern lag ein fettfreies mayonnaiseartiges Produkt vor, das sowohl vom Mundgefühl als auch vom Geschmack einer Mayonnaise sehr ähnlich war. In diesem Rezepturbeispiel war das Produkt weiß. Man kann jedoch auf Wunsch selbstverständlich auch einen entsprechenden Gelbton durch Zusatz von z.B. Karotin einfärben.

Die so hergestellten fettreduzierten, mayonnaiseartigen Emulsionen enthielten je nach Verwendung von Zucker oder Zuckeraustauschstoff nur noch 120 bis 160 kcal/100 g Produkt und waren außerdem cholesterinarm. Bei der Herstellung von Diätprodukten auf Basis dieser mayonnaiseartigen Emulsionen wurde das Kochsalz durch natriumfreie Kochsalzsubstitute ersetzt.

## Patentansprüche

1. Mayonnaiseartiges Produkt erhältlich durch Verarbeitung von mit besonders amylopektinreicher Stärke als Dickungsmittel pastenförmig angedickter Frischmilch, eßbarer Säure, üblichen Zusatzstoffen und gegebenenfalls Speiseöl zu einer Emulsion.

2. Mayonnaiseartiges Produkt nach Anspruch 1, bei dem die Stärke native oder modifizierte Weizen- und/oder Waxymaisstärke ist.

3. Mayonnaiseartiges Produkt nach Anspruch 1 oder 2, das als Dickungsmittel zusätzlich ein durch Hitzeeinwirkung koagulierendes Protein enthält.

4. Mayonnaiseartiges Produkt nach Anspruch 3, bei dem das Protein aus Hühnereiweiß und/oder Molkenproteinen besteht.

5. Mayonnaiseartiges Produkt nach einem der Ansprüche 1 bis 4, das zusätzlich Stabilisator enthält.

6. Mayonnaiseartiges Produkt nach Anspruch 5, bei dem der Stabilisator ein Hydrokolloid ist.

7. Mayonnaiseartiges Produkt nach Anspruch 6, bei dem das Hydrokolloid Guar ist.

8. Mayonnaiseartiges Produkt nach einem der Ansprüche 1 bis 7, das zur funktionellen Proteinanreicherung der Frischmilch zusätzlich Milchproteine enthält.

9. Mayonnaiseartiges Produkt nach Anspruch 8, bei dem die Milchproteine Milchpulver oder Kaseinate sind.

10. Mayonnaiseartiges Produkt nach einem der Ansprüche 1 bis 9, bei dem der Speiseölanteil 0 bis 15 Gew.-% und vorzugsweise 4 bis 8 Gew.-% beträgt.

11. Mayonnaiseartiges Produkt nach einem der Ansprüche 1 bis 10, das bezogen auf die Frischmilch nicht mehr als 15 Gew.-% und vorzugsweise 5 bis 10 Gew.-% Amylopektinstärke enthält.

12. Mayonnaiseartiges Produkt nach einem der Ansprüche 1 bis 11, bei dem die pastenförmig angedickte Frischmilch aus mehr als 75 Gew.-% und vorzugsweise mehr als 85 Gew.-% Frischmilch besteht.

13. Verfahren zur Herstellung des mayonnaiseartigen Produkts gemäß einem der Ansprüche 1 bis 12, bei dem man Frischmilch mit Amylopektinstärke sowie gegebenenfalls weiteren Dickungsmitteln, Stabilisatoren, Milchproteinen und üblichen Zusatzstoffen mischt, die Mischung kurzzeitig auf 75°C bis 95°C, vorzugsweise 85°C bis 92°C erwärmt und die erhaltene pastenförmige Mischung unter Zusatz von eßbarer Säure, üblichen Zusatzstoffen und gegebenenfalls Speiseöl zu einer Emulsion verarbeitet, wobei man das Speiseöl erst nach Abkühlung auf eine Temperatur von 30°C oder weniger zusetzt.

14. Verwendung des mayonnaiseartigen Produkts gemäß einem der Ansprüche 1 bis 12 zur Herstellung von kalorienreduzierten Salatsaucen, Salatcremes, Dressings, Remouladen und Salaten.

## Claims

1. Mayonnaise-like product, obtainable by processing of fresh milk paste-like thickened with especially amylopectin-rich starch as thickening agent, comestible acid, common additives and optionally edible oil to yield an emulsion.

2. Mayonnaise-like product according to claim 1 wherein the starch is native or modified wheat and/or waxy maize (waxy corn) starch.

3. Mayonnaise-like product according to claim 1 or 2, further containing a protein coagulated by heat soaking as a thickening agent.

4. Mayonnaise-like product according to claim 3 wherein the protein consists of egg albumen and/or whey protein.

5. Mayonnaise-like product according to claims 1 to 4, further containing stabilizer.

6. Mayonnaise-like product according to claim 5 wherein the stabilizer is a hydrocolloid.

7. Mayonnaise-like product according to claim 6 wherein the hydrocolloid is guar.

8. Mayonnaise-like product according to claims 1 to 7, further containing milk proteins for functional protein enrichment of the fresh milk.

9. Mayonnaise-like product according to claim 8 wherein the milk proteins are milk powder or caseinates.

10. Mayonnaise-like product according to claims 1 to 9 wherein the amount of the edible oil is 0 to 15 % by weight and preferably 4 to 8 % by weight.

11. Mayonnaise-like product according to claims 1 to 10 containing not more than 15 % by weight and preferably not more than 5 to 10 % by weight amylopectin starch, based on the fresh milk.

12. Mayonnaise-like product according to claims 1 to 11 wherein the fresh paste-like thickened milk consists of more than 75 % by weight and preferably more than 85 % by weight of fresh milk.

13. Method for preparing a mayonnaise-like product according to claims 1 to 12 comprising the steps of mixing fresh milk with amylopectin starch and optionally additional thickening agents, stabilizers, milk proteins and common additives, heating the mixture for a short time to 75°C to 95°C, preferably 85°C to 92°C, and processing the obtained pasty mixture with addition of comestible acid, common additives and optionally edible oil to an emulsion, the edible oil being added only after cooling to a temperature of 30°C or less.

14. Use of a mayonnaise-like product according to claims 1 to 12 for preparation of low-calory salad dressings, salad creams, dressings, remoulades and salads.

## Revendications

1. Produit analogue à une mayonnaise que l'on peut obtenir par la transformation de lait frais épaissi sous forme pâteuse à l'aide d'un amidon particulièrement riche en amylopectine servant d'agent épaississant, d'un acide comestible, d'additifs usuels et éventuellement d'huile comestible en une émulsion.

2. Produit analogue à une mayonnaise suivant la revendication 1, caractérisé en ce que l'amidon est de l'amidon naturel ou de l'amidon de blé et/ou de maïs cireux modifié.

3. Produit analogue à une mayonnaise suivant la revendication 1 ou 2, caractérisé en ce qu'il contient complémentairement une protéine coagulant sous l'effet de la chaleur à titre d'agent épaississant.

4. Produit analogue à une mayonnaise suivant la revendication 3, conformément auquel la protéine se compose d'albumine d'oeuf de poule et/ou de protéines de petit lait.

5. Produit analogue à une mayonnaise suivant l'une quelconque des revendications 1 à 4, caractérisé en ce qu'il comprend complémentairement un stabilisant.

6. Produit analogue à une mayonnaise suivant la revendication 5, caractérisé en ce que le stabilisant est un hydrocolloïde.

7. Produit analogue à une mayonnaise suivant la revendication 6, caractérisé en ce que l'hydrocolloïde est de la gomme guar.

8. Produit analogue à une mayonnaise suivant l'une quelconque des revendications 1 à 7, caractérisé en ce qu'il contient complémentairement des protéines de lait pour l'enrichissement fonctionnel en protéines du lait frais.

9. Produit analogue à une mayonnaise suivant la revendication 8, caractérisé en ce que les protéines de lait sont des caséinates ou de la poudre de lait.

10. Produit analogue à une mayonnaise suivant l'une quelconque des revendications 1 à 9, caractérisé en ce que la proportion d'huile comestible varie de 0 à 15% en poids et, de préférence, de 4 à 8% en poids.

11. Produit analogue à une mayonnaise suivant l'une quelconque des revendications 1 à 10, caractérisé en ce que, par rapport au lait frais, il ne contient pas plus de 15% en poids et, de préférence de 5 à 10% en poids, d'amidon d'amylopectine.

12. Produit analogue à une mayonnaise suivant l'une quelconque des revendications 1 à 11, caractérisé en ce que le lait frais épaissi en forme de pâte est constitué de plus de 75% en poids et, de préférence, de plus de 85% en poids, de lait frais.

13. Procédé de fabrication d'un produit analogue à une mayonnaise suivant l'une quelconque des revendications 1 à 12, caractérisé en ce que l'on mélange du lait frais avec de l'amidon d'amylopectine, ainsi qu'éventuellement d'autres agents épaississants, des stabilisants, des protéines de lait et des additifs usuels, on chauffe brièvement le mélange à 75°C-95°C, de préférence 85°C-92°C et on transforme le mélange pâteux ainsi obtenu sous addition d'un acide comestible, d'additifs usuels et éventuellement d'une huile comestible en une émulsion, où l'on n'ajoute seulement l'huile comestible qu'après refroidissement jusqu'à une température de 30°C ou inférieure à 30°C.

14. Utilisation du produit analogue à une mayonnaise suivant l'une quelconque des revendications 1 à 12 pour la fabrication de sauces pour salades, de crèmes pour salades, d'assaisonnements, de rémoulades et de salades, à teneur réduite en calories.
